# EUROPÄISCHE PATENTSCHRIFT

(11) **EP 1 575 754 B1**
(45) Veröffentlichungstag und Bekanntmachung des Hinweises auf die Patenterteilung: **21.06.2006**
(21) Anmeldenummer: 03767452.0
(22) Anmeldetag: 26.11.2003
(51) Int. Cl.: B29C 49/38, B29C 47/12

(54) **VORRICHTUNG ZUR HERSTELLUNG VON QUERRIPPENROHREN**
DEVICE FOR PRODUCING TUBES PROVIDED WITH CROSS RIBS
DISPOSITIF POUR PRODUIRE DES TUYAUX A NERVURES TRANSVERSALES

(30) Priorität: 09.12.2002 DE 20219027 U
(43) Veröffentlichungstag der Anmeldung: 21.09.2005
(73) Patentinhaber: UNICOR GmbH, 97437 Hassfurt (DE)
(72) Erfinder: HOFMANN, Günther, 97437 Hassfurt (DE)
(74) Vertreter: Köhler, Walter
(86) Internationale Anmeldenummer: PCT/DE2003/003906
(87) Internationale Veröffentlichungsnummer: WO 2004/052624

(56) Entgegenhaltungen:
- WO-A-01/58669
- DE-C- 19 702 645
- DE-C- 19 702 647
- US-B1- 6 457 965

## Beschreibung

Die Erfindung betrifft eine Vorrichtung gemäß dem Oberbegriff des Anspruches 1 zur Herstellung von Querrippenrohren.

Aus der DE 197 02 645 C1 ist beispielsweise eine Vorrichtung zur Herstellung von Querrippenrohren bekannt, die entlang der gemeinsamen Formstrecke zur Führung der Formbackenhälften eine Linearführungseinrichtung aufweist, die von einem länglichen zentralen Gleitkörper, vorzugsweise aus einer Gleitmetallegierung, und zwei seitlich neben dem Gleitkörper vorgesehenen ölgeschmierten Führungskörpem, vorzugsweise aus einem abriebfesten Metall, gebildet ist.

Aus der US-A-6457965 ist eine Vorrichtung zur Herstellung von Querrippenrohren bekannt, mit Formbackenhälften, die entlang zweier endloser Führungsbahnen mittels jeweils einer zugehörigen Antriebseinrichtung umlaufend bewegt werden. Die Formbackenhälften der jeweiligen Führungsbahn sind mittels einer endlosen Kette miteinander verbunden. Die beiden Führungsbahnen weisen eine gemeinsame Formstrecke, jeweils eine Rücklaufstrecke und jeweils zwei Umlenkstrecken auf. An den Umlenkstrecken liegen die Formbackenhälften nicht aneinander an. Diese bekannte Vorrichtung weist ein Maschinenbett mit einer Grundplatte aus Stahl und mit einer darauf angebrachten Auflageplatte aus einem Gleitlagermetall, beispielsweise Bronze, auf.

Gattungsgemäße Vorrichtungen, wie sie beispielsweise aus den oben zitierten Druckschriften bekannt sind, mit Verschleißteilen aus Metall weisen den Mangel auf, daß die Verschleißteile relativ kostenintensiv sind. Ein weiterer Mangel besteht darin, daß ein Austausch der Verschleißteile, wie er nach einer langen Betriebsdauer der Vorrichtung oftmals nicht vermeidbar ist, sehr zeitaufwendig und folglich ebenfalls kostenintensiv ist. Oftmals ist es dem Anwender einer solchen bekannten Vorrichtung gar nicht möglich, den erforderlichen Austausch vorzunehmen, was bedeutet, daß entweder die Vorrichtung an den Hersteller derselben zurückgesandt oder daß ein Monteur des Herstellers der Vorrichtung zum Anwender der Vorrichtung abgesandt werden muß. Das alles ist mit einem erheblichen Aufwand verbunden.

In Kenntnis dieser Gegebenheiten liegt der Erfindung die Aufgabe zugrunde, eine Vorrichtung der eingangs genannten Art zu schaffen, wobei die Verschleißteile vergleichsweise preisgünstig sind und der Austausch der Verschleißteile einfach und zeitsparend - auch vom Anwender der Vorrichtung vor Ort - innerhalb kürzester Zeit möglich ist.

Diese Aufgabe wird bei einer Vorrichtung der eingangs genannten Art erfindungsgemäß durch die Merkmale des Kennzeichenteiles des Anspruches 1 gelöst.

Die länglichen Verschleißelemente aus dem verschleißarmen Kunststoffmaterial sind an der Basiseinrichtung der erfindungsgemäßen Vorrichtung derartig vorgesehen, daß sie im Bedarfsfall, d.h. nach einer langen Betriebsdauer der Vorrichtung und einer entsprechenden Abnutzung, d.h. einem entsprechenden Verschleiß der Verschleißteile, einfach und zeitsparend ausgetauscht und durch ungebrauchte neue Kunststoff-Verschleißteile ersetzt werden können.

Um während des Betriebes der erfindungsgemäßen Vorrichtung jederzeit eine zuverlässige Anlage der Verschleißteile an den entlang der endlosen Führungsbahnen aneinander anliegend umlaufenden Formbackenhälften zu gewährleisten, sind die länglichen Verschleißelemente aus verschleißarmem Kunststoffmaterial an der Basiseinrichtung vorzugsweise federnd vorgesehen.

Die länglichen Verschleißelemente bestehen vorzugsweise aus einem verschleißarmen Kunststoffmaterial. Als besonders vorteilhaft hat es sich erwiesen, wenn ein Kunststoffmaterial mit Öleinlagerungen für die Verschleißelemente zur Anwendung gelangt, weil hierdurch die Reibung zwischen den Verschleißelementen und den Formbackenhälften minimiert und folglich die Produktivität der Vorrichtung entsprechend erhöht wird.

Die länglichen Verschleißelemente sind zweckmäßigerweise mit zwei Längsschlitzen ausgebildet, die voneinander seitlich beabstandet zueinander parallel vorgesehen sind und die mit einem Kühlmediumzulauf und mit einem Kühlmediumablauf der Formbackenhälften deckungsgleich vorgesehen sind. Der Kühlmediumzulauf und der Kühlmediumablauf der jeweiligen Formbackenhälfte sind zweckmäßigerweise derartig gestaltet, wie in der Patentanmeldung 10257363.8 beschrieben ist, die insofern zum Offenbarungsgehalt der vorliegenden Anmeldung gehört.

Als vorteilhaft hat es sich erwiesen, wenn die zwischen der gemeinsamen Formstrecke und den beiden Rücklaufstrecken vorgesehenen Umlenkorgane aus einem verschleißarmen Kunststoffmaterial bestehen, bei dem es sich vorzugsweise ebenfalls um ein Kunststoffmaterial mit Öleinlagerungen handelt.

Die Umlenkorgane der erfindungsgemäßen Vorrichtung sind vorzugsweise jeweils mit einer Kompensationseinrichtung verbunden, mittels welcher ein temperatur- und/oder geschwindigkeitsabhängiges Toleranzspiel der entlang der jeweils zugehörigen Führungsbahn umlaufenden Formbackenhälften ausgeglichen wird.

Die erfindungsgemäße Vorrichtung weist den Vorteil auf, daß sowohl die länglichen Verschleißelemente der gemeinsamen Formstrecke und der beiden Rücklaufstrecken als auch die Umlenkorgane an den Umlenkstrecken relativ preisgünstig zur Verfügung stehen und einfach und zeitsparend problemlos im Bedarfsfall ausgetauscht und durch ungebrauchte neue Komponenten ersetzt werden können.

Weitere Einzelheiten, Merkmale und Vorteile ergeben sich aus der nachfolgenden Beschreibung eines in der Zeichnung dargestellten Ausführungsbeispieles der erfindungsgemäßen Vorrichtung bzw. wesentlicher Einzelheiten derselben.

Es zeigen:
- Figur 1: abgeschnitten eine Ausbildung der Vorrichtung in Blickrichtung von oben,
- Figur 2: eine Ansicht zweier Formbackenhälften an der gemeinsamen Formstrecke in Blickrichtung der Pfeile II-II in Figur 1, und
- Figur 3: eine perspektivische Ansicht einer Umlenkstrecke der Vorrichtung, wobei eine Formbackenhälfte abgeschnitten dargestellt ist.

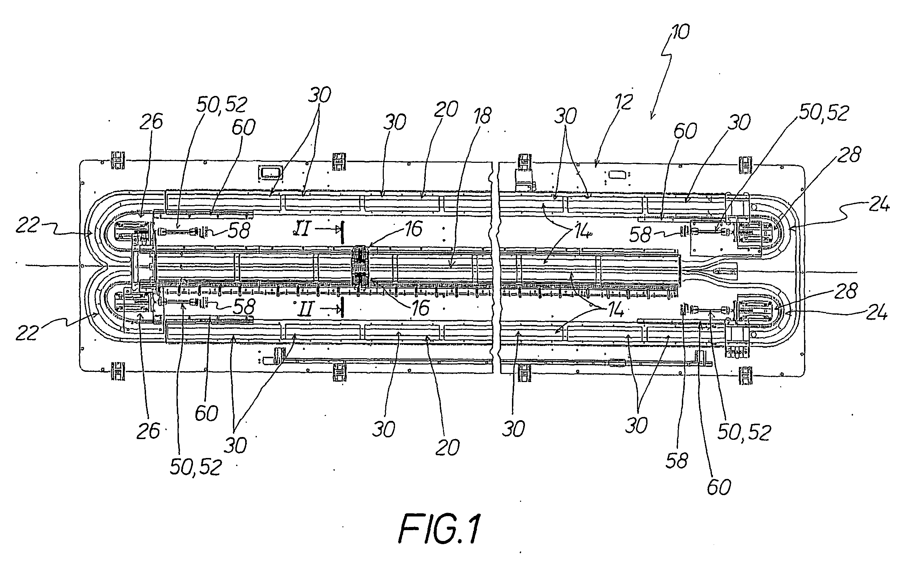

Figur 1 zeigt in einer Ansicht von oben abgeschnitten eine Vorrichtung 10 zur Herstellung von Querrippenrohren. Die Vorrichtung 10 weist eine Basiseinrichtung 12 mit zwei endlosen Führungsbahnen 14 für Formbackenhälften 16 auf, von welchen in Figur 1 nur zwei Formbackenhälften 16 dargestellt sind. Die beiden Führungsbahnen 14 weisen eine gemeinsame Formstrecke 18, jeweils eine zur gemeinsamen Formstrecke 18 parallel verlaufende Rücklaufstrecke 20 und jeweils zwei Umlenkstrecken 22 und 24 auf. An den Umlenkstrecken 22 sind Umlenkorgane 26 und an den Umlenkstrecken 24 sind Umlenkorgane 28 vorgesehen.

Entlang der gemeinsamen Formstrecke 18 und entlang den Rücklaufstrecken 20 sind längliche Verschleißelemente 30 vorgesehen. Die länglichen Verschleißelemente 30 sind an der Basiseinrichtung 12 einfach und zeitsparend austauschbar vorgesehen. Die länglichen Verschleißelemente 30 bestehen aus einem verschleißarmen Kunststoffmaterial mit Öleinlagerungen.

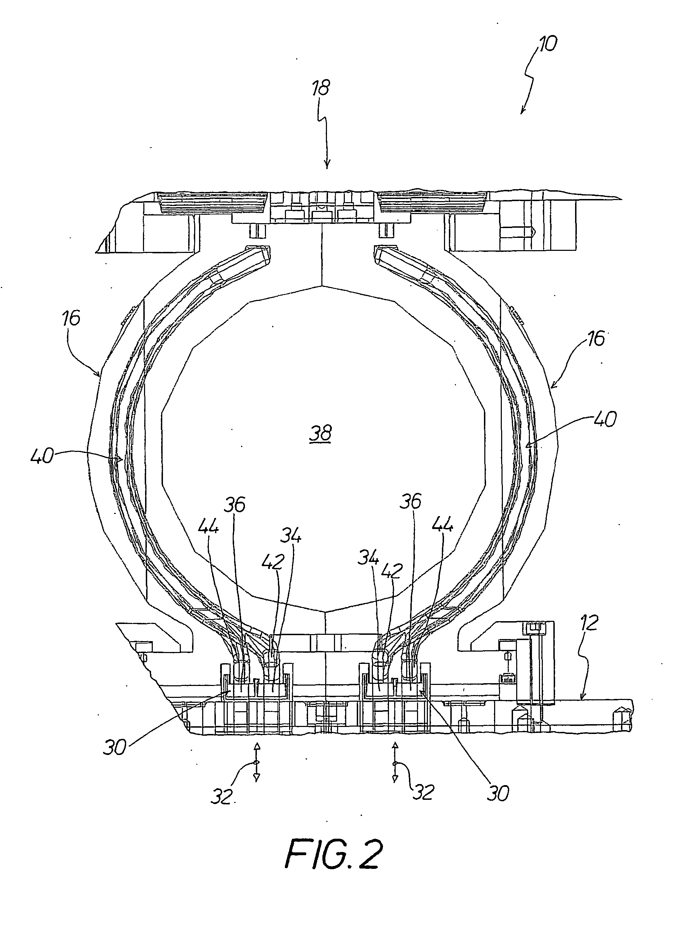

Die länglichen Verschleißelemente 30 sind an der Basiseinrichtung 12 federnd vorgesehen. Das ist in Figur 2 durch die Doppelpfeile 32 schematisch angedeutet. Die Figur 2 verdeutlicht außerdem, daß die länglichen Verschleißelemente 30 jeweils mit zwei Längsschlitzen 34 und 36 ausgebildet sind. Die Längsschlitze 34 und 36 sind voneinander beabstandet und verlaufen zueinander parallel.

Die Formbackenhälften 16, die entlang der gemeinsamen Formstrecke 18 einen Formkanal 38 für das herzustellende Querrippenrohr bilden, sind jeweils mit einem Kühlkanal 40 mit einem Kühlmediumzulauf 42 und mit einem Kühlmediumablauf 44 ausgebildet. Der jeweilige Kühlmediumzulauf 42 ist mit dem zugehörigen Längsschlitz 34 deckungsgleich vorgesehen. Der jeweilige Kühlmediumablauf 44 ist mit dem zugehörigen Längsschlitz 36 deckungsgleich vorgesehen. Der Kühlmediumzulauf 42 und der Kühlmediumablauf 44 sind vorzugsweise derartig gestaltet, wie in der Patentanmeldung 10257363.8 beschrieben ist.

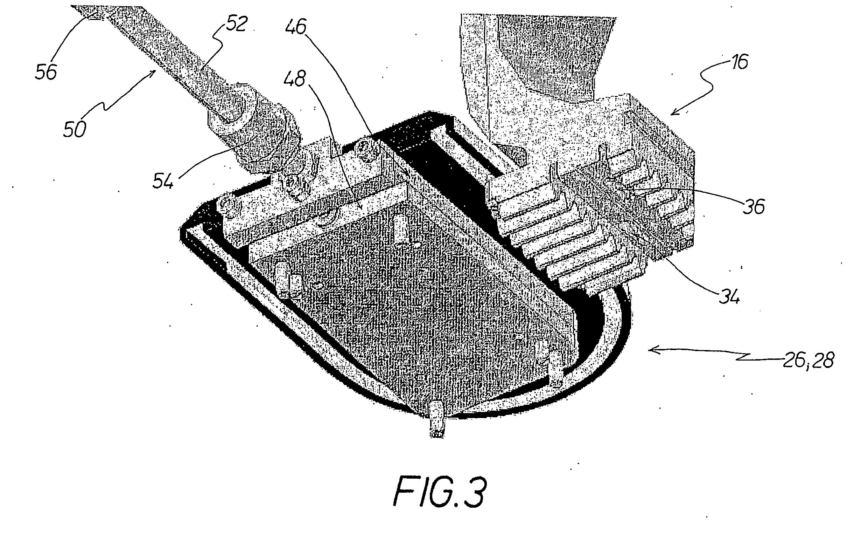

Die zwischen der gemeinsamen Formstrecke 18 und den beiden Rücklaufstrecken 20 vorgesehenen Umlenkorgane 26 und 28, von welchen eines in Figur 3 perspektivisch in einer Ansicht von unten dargestellt ist, bestehen aus einem Öleinlagerungen aufweisenden verschleißarmen Kunststoffmaterial. Das jeweilige Umlenkorgan 26, 28 ist an einem Verschiebeelement 46 loslösbar befestigt, das an einem Basiselement 48 linear beweglich geführt angeordnet ist. Das Basiselement 48 ist maschinenfest vorgesehen.

An das Verschiebeelement 46 ist eine Kompensationseinrichtung 50 angeschlossen, die als Luftfeder 52 beschrieben wird (sh. die Figuren 1 und 3). Eine solche Kompensationseinrichtung bzw. Luftfeder ist beispielsweise im Prospekt der Fa. Festo "Fluidic Muscle Typ MAS...." beschrieben. Die Luftfeder 52 weist zwei Anschlußarmaturen 54 und 56 auf. Mit der Anschlußarmatur 54 ist die Luftfeder 52 an das Verschiebeelement 46 angeschlossen. Die Anschlußarmatur 56 ist an eine maschinenfeste Konsole 58 (sh. Figur 1) angeschlossen und mit einem Druckluftanschluß versehen.

Die Kompensationseinrichtungen 50 mit den Luftfedern 52 dienen dazu, ein temperatur- und/oder geschwindigkeitsabhängiges Toleranzspiel der entlang der zugehörigen Führungsbahn 14 umlaufenden, aneinander anliegenden Formbackenhälften 16 auszugleichen, so daß sich ein stoßfreier Übergang zwischen den geradlinigen Rücklaufstrecken 20 und den Umlenkstrecken 22, 24 sowie zwischen den Umlenkstrecken 22 und 24 und der gemeinsamen geradlinigen Formstrecke 18 ergibt. Die Vorrichtung 10 ist folglich mit einer entsprechend hohen Betriebsgeschwindigkeit und hoher Produktivität betreibbar.

In Figur 1 sind an den besagten Übergängen weitere Führungselemente 60 dargestellt, die - wie die Verschieißelemente 30 und die Umlenkorgane 26, 28 - aus einem verschleißarmen Kunststoffmaterial mit Öleinlagerungen bestehen und die ebenfalls einfach und zeitsparend im Bedarfsfall ausgetauscht und durch neue Führungselemente 60 ersetzt werden können.

## Patentansprüche

1. Vorrichtung zur Herstellung von Querrippenrohren, mit Formbackenhälften (16), die entlang zweier endloser Führungsbahnen (14) aneinander anliegend mittels jeweils einer zugehörigen Antriebseinrichtung umlaufend bewegt werden, wobei die beiden Führungsbahnen (14) eine gemeinsame Formstrecke (18), jeweils eine Rücklaufstrecke (20) und jeweils zwei Umlenkstrecken (22, 24) aufweisen, wobei die jeweilige Umlenkstrecke (22, 24) ein Umlenkorgan (26, 28) mit einem bogenförmigen Führungsrand aufweist, wobei die Führungsbahnen (14) längliche Verschleißelemente (30) aufweisen, die an einer Basiseinrichtung (12) der Vorrichtung (10) austauschbar vorgesehen sind,
**dadurch gekennzeichnet,**
**daß** die Führungsbahnen (14) entlang der gemeinsamen Formstrecke (18) und entlang den Rücklaufstrecken (20) längliche Verschleißelemente (30) aus einem verschleißarmen Kunststoffmaterial aufweisen.

2. Vorrichtung nach Anspruch 1,
**dadurch gekennzeichnet ,**
**daß** die länglichen Verschleißelemente (30) an der Basiseinrichtung (12) federnd vorgesehen sind.

3. Vorrichtung nach Anspruch 1,
**dadurch gekennzeichnet,**
**daß** das Kunststoffmaterial Öleinlagerungen aufweist.

4. Vorrichtung nach einem der Ansprüche 1 bis 3,
**dadurch gekennzeichnet ,**
**daß** die länglichen Verschleißelemente (30) mit zwei Längsschlitzen (34, 36) ausgebildet sind, die voneinander seitlich beabstandet zueinander parallel vorgesehen sind und die mit einem Kühlmediumzulauf (42) und mit einem Kühlmediumablauf (44) der Formbackenhälften (16) deckungsgleich vorgesehen sind.

5. Vorrichtung nach Anspruch 1,
**dadurch gekennzeichnet ,**
**daß** die zwischen der gemeinsamen Formstrecke (18) und den beiden Rücklaufstrecken (20) vorgesehenen Umlenkorgane (26, 28) aus einem verschleißarmen Kunststoffmaterial bestehen.

6. Vorrichtung nach Anspruch 5,
**dadurch gekennzeichnet ,**
**daß** das Kunststoffmaterial Öleinlagerungen aufweist.

7. Vorrichtung nach Anspruch 5 oder 6,
**dadurch gekennzeichnet ,**
**daß** die Umlenkorgane (26, 28) jeweils mit einer ein temperatur- und/oder geschwindigkeitsabhängiges Toleranzspiel der entlang der zugehörigen Führungsbahn (14) umlaufenden Formbackenhälften (16) ausgleichenden Kompensationseinrichtung (50) verbunden sind.

## Claims

1. Apparatus for producing transversely ribbed tubes, having moulding jaw halves (16) which are moved in a circulating manner along two endless guide paths (14) in such a way as to bear against one another by means of a respective associated drive device, the two guide paths (14) having a common moulding section (18), a respective return section (20) and two respective deflecting sections (22, 24), the respective deflecting section (22, 24) having a deflecting member (26, 28) with a curved guide margin, the guide paths (14) having elongated wearing elements (30) which are interchangeably provided on a base device (12) of the apparatus (10), **characterized in that** the guide paths (14) along the common moulding section (18) and along the return sections (20) have elongated wearing elements (30) made of a low-wear plastic material.

2. Apparatus according to Claim 1, **characterized in that** the elongated wearing elements (30) are provided on the base device (12) in a flexible manner.

3. Apparatus according to Claim 1, **characterized in that** the plastic material has oil inclusions.

4. Apparatus according to one of Claims 1 to 3, **characterized in that** the elongated wearing elements (30) are formed with two elongated slots (34, 36) which are provided at a lateral distance from and parallel to one another and which are provided so as to be congruent with a cooling-medium inflow (42) and with a cooling-medium outflow (44) of the moulding jaw halves (16).

5. Apparatus according to Claim 1, **characterized in that** the deflecting members (26, 28) provided between the common moulding section (18) and the two return sections (20) are made of a low-wear plastic material.

6. Apparatus according to Claim 5, **characterized in that** the plastic material has oil inclusions.

7. Apparatus according to Claim 5 or 6, **characterized in that** the deflecting members (26, 28) are each connected to a compensation device (50) which compensates for temperature- and/or speed-dependent tolerance play of the moulding jaw halves (16) circulating along the associated guide path (14).

## Revendications

1. Dispositif pour produire des tuyaux à nervures transversales, comportant des demi-moules (16) qui sont déplacés de manière à circuler le long de deux glissières sans fin (14), de façon adjacente l'une à l'autre, au moyen d'un dispositif d'entraînement associé, les deux glissières (14) comportant une section de moulage commune (18), une section de retour (20) et deux sections de déviation (22, 24), la section de déviation respective (22, 24) comportant un organe de déviation (26, 28) avec un bord de guidage arqué, les glissières (14) comportant des éléments d'usure (30) qui sont prévus, de manière à pouvoir être échangés, sur un équipement de base (12) du dispositif (10), **caractérisé en ce que** les glissières (14) comportent, le long de la section de moulage commune (18) et le long des sections de retour (20), des éléments d'usure oblongs (30) fabriqués dans un matériau plastique à faible usure.

2. Dispositif selon la revendication 1, **caractérisé en ce que** les éléments d'usure oblongs (30) sont prévus de manière résiliente sur le dispositif de base (12).

3. Dispositif selon la revendication 1, **caractérisé en ce que** le matériau plastique comporte des inclusions d'huile.

4. Dispositif selon l'une quelconque des revendications 1 à 3, **caractérisé en ce que** les éléments d'usure oblongs (30) sont réalisés avec deux fentes longitudinales (34, 36) qui sont prévues parallèlement l'une à l'autre, de manière à être espacées l'une de l'autre latéralement, et qui sont prévues de façon à coïncider avec une entrée de fluide réfrigérant (42) et une sortie de fluide réfrigérant (44) des demi-moules (16).

5. Dispositif selon la revendication 1, **caractérisé en ce que** les organes de déviation (26, 28), se trouvant entre la section de moulage commune (18) et les deux sections de retour (20), sont fabriqués dans un matériau plastique à faible usure.

6. Dispositif selon la revendication 5, **caractérisé en ce que** le matériau plastique comporte des inclusions d'huile.

7. Dispositif selon la revendication 5 ou 6, **caractérisé en ce que** les organes de déviation (26, 28) sont raccordés à un dispositif de compensation (50) compensant un jeu de tolérance dépendant de la température et/ou de la vitesse des demi-moules (16) circulant le long de la glissière (14) associée.
